(19) Europäisches Patentamt
European Patent Office
Office européen des brevets

(11) EP 0 828 794 B1

(12) **EUROPÄISCHE PATENTSCHRIFT**

(45) Veröffentlichungstag und Bekanntmachung des Hinweises auf die Patenterteilung:
**19.01.2000 Patentblatt 2000/03**

(21) Anmeldenummer: **96917414.3**

(22) Anmeldetag: **23.05.1996**

(51) Int Cl.[7]: **C08L 83/04**, C08J 3/03, C08K 5/54

(86) Internationale Anmeldenummer:
**PCT/EP96/02227**

(87) Internationale Veröffentlichungsnummer:
**WO 96/37556 (28.11.1996 Gazette 1996/52)**

# (54) WÄSSRIGE DISPERSIONEN VON ORGANOPOLYSILOXANEN

AQUEOUS DISPERSIONS OF ORGANOPOLYSILOXANES

DISPERSIONS AQUEUSES D'ORGANOPOLYSILOXANES

(84) Benannte Vertragsstaaten:
**AT BE CH DE ES FR GB IT LI NL**

(30) Priorität: **24.05.1995 DE 19519207**

(43) Veröffentlichungstag der Anmeldung:
**18.03.1998 Patentblatt 1998/12**

(73) Patentinhaber: **Wacker-Chemie GmbH**
**81737 München (DE)**

(72) Erfinder:
- **OBERNEDER, Stefan**
  **D-84489 Burghausen (DE)**
- **BRAUNSPERGER, Karl**
  **D-84489 Burghausen (DE)**
- **HEINRICH, Alfred**
  **A-5122 Ach (AT)**
- **BRAUN, Rudolf**
  **D-84556 Kastl (DE)**
- **SOELLRADL, Herbert**
  **D-84547 Emmerting (DE)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:

| | |
|---|---|
| **EP-A- 0 365 439** | **EP-A- 0 378 952** |
| **EP-A- 0 415 254** | **EP-A- 0 640 670** |
| **EP-A- 0 655 475** | **US-A- 4 894 412** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft wäßrige Dispersionen von Organopolysiloxanen, die sich nach Entfernen von Wasser in Elastomere überführen lassen, Verfahren zu deren Herstellung und deren Verwendung als Dicht- und Beschichtungsstoffe.

Maßnahmen zum Umweltschutz zwingen in zunehmendem Maße zur Vermeidung organischer Lösungsmittel in chemischen Zubereitungen. Demzufolge finden immer mehr wäßrige Systeme Verwendung.

Wäßrige Dispersionen von Organopolysiloxanen sind an sich vielfach bekannt. Der grundsätzliche Aufbau solcher Dispersionen, die bereits bei Raumtemperatur zu Elastomeren vulkanisieren, setzt sich aus einem linearen Polymeren, einer Vernetzerkomponente und einem Vernetzungskatalysator zusammen. Im allgemeinen wird eine wäßrige Emulsion von Polydiorganosiloxanen vorgelegt, deren Endgruppen kondensationsfähige Gruppen aufweisen. Diese hochmolekularen Polysiloxane werden entweder direkt emulgiert oder meist in Emulsion nach herkömmlichen Verfahren durch Polymerisation, Kondensation und Equilibrierung aus linearen oder cyclischen niedermolekularen Polysiloxanen hergestellt. Die Polymeremulsion wird im allgemeinen dann mit einer Vernetzerkomponente und Kondensationskatalysator jeweils in Substanz oder als Emulsion sowie weiteren Bestandteilen, wie Füllstoffen, Haftvermittlern, etc. vermischt, wobei es sich bei dem Katalysator fast ausschließlich um (Organo-)Metallverbindungen handelt.

Die nahezu ausnahmslos als Katalysatoren eingesetzten (Organo-)Metallkatalysatoren haben den Nachteil, daß sie zum einen die Lagerstabilität der unvulkanisierten Massen aber auch die Beständigkeit der ausvulkanisierten Elastomere beeinträchtigen und zum anderen als toxikologisch bedenklich gelten. Bei einer Vielzahl der bisherigen Entwicklungen stellt die sehr aufwendige, zeit- und damit kostenintensive Herstellung der wäßrigen Emulsionen einen Nachteil dar. Diese Probleme resultieren hauptsächlich aus einer Reaktionszeit beanspruchenden Emulsionspolymerisation, -kondensation bzw. Equilibrierung der einzusetzenden Polydiorganosiloxane, die der Herstellung des Endprodukts durch Zumischung der weiteren Bestandteile vorangestellt werden muß. Ein weiterer Nachteil der meisten bisher bekannten, wäßrigen Emulsionen liegt im geringen Feststoffgehalt. Ein hoher Festgehalt bildet jedoch die Voraussetzung für eine geringe oder verschwindende Schrumpfung beim Ausvulkanisieren, die für die meisten Anwendungsbereiche wünschenswert ist.

Beispielsweise werden in der deutschen Anmeldung DE 42 17 561 (Wacker-Chemie GmbH; angemeldet am 27. Mai 1992) bzw. der entsprechenden US-Anmeldung mit der Seriennummer USSN 08/056,088 wäßrige Dispersionen von Organopolysiloxanen aus kondensationsfähigem Organopolysiloxan, Siliconharz, Polyvinylalkohol, (Organo-) Metallkatalysator und aminofunktionellen Substanzen beschrieben, mit denen transparente Vulkanisate erhalten werden.

Des weiteren werden in US-A 5,045,231 (Wacker-Chemie GmbH; ausgegeben am 3. September 1991) bzw. der entsprechenden DE-A 39 32 025 wäßrige Dispersionen von Organopolysiloxanen aus kondensationsfähigen Organopolysiloxanen, (Organo-)Metallkatalysatoren, Organopolysiloxanharzen und Diorganosilanolaten beansprucht, wobei der Feststoffgehalt der Dispersionen bis zu 90 % betragen kann.

In DE-B 1037707 (Dow Corning; ausgegeben am 28. August 1958) wird ein Verfahren zur Herstellung von Emulsionen von hochmolekularen Organopolysiloxanen ausgehend von einer Emulsion von niedermolekularen Siloxanen offenbart. Die gewünschte Molekulargröße wird erreicht mit Hilfe stark saurer oder alkalischer Katalysatoren. Diese Emulsionen führen zu keinen Elastomeren.

Gemäß US-A 5,004,771 (Rhone Poulenc; ausgegeben am 2. April 1990) bzw. in der entsprechenden EP-A 365 439 wird in wäßriger Emulsion die sauere Kondensation eines OH-endblockierten Polydiorganosiloxans durchgeführt. Nach Neutralisation der Polymeremulsion werden die weiteren Bestandteile, wie Methylsiliconatlösung und nichtsilikatischer Füllstoff, nicht jedoch basischen Stickstoff aufweisende Verbindungen, zugesetzt. Die beschriebenen Emulsionen, die einen Feststoffgehalt von unter 90 % aufweisen, ergeben jedoch keine Elastomere.

In US-A 4,894,412 (Shin-Etsu Chemical Co.Ltd.; ausgegeben am 16. Januar 1990) wird ein Prozeß zur Herstellung von Textilbeschichtungen beschrieben. Es handelt sich hierbei um eine Polysiloxanemulsion geringen Festgehalts aus Organosiliciumkomponente, aminofunktionellem Siloxan und Organosilanen. Der beschriebene Prozeß umfaßt eine Emulsionspolymerisation sowie anschließende Neutralisation. Die erhaltene Dispersion wird in dünner Schicht auf Textilien aufgetragen und in der Hitze, beispielsweise 105°C/3 Stunden vulkanisiert.

Des weiteren werden in der deutschen Anmeldung DE-A-4 340 400 & EP-A-0 655 475 (Wacker-chemie GmbH; angemeldet am 26. November 1993) bzw. der entsprechenden US-Anmeldung mit der Seriennummer USSN 08/342,192 wäßrige Dispersionen aus kondensationsfähigem Organopolysiloxan, niedermolekularem Siliconharz und basischen Stickstoff enthaltender Verbindung, die frei sind von organischen Übergangsmetallverbindungen, beschrieben.

Gegenstand der Erfindung sind wäßrige Dispersionen von Organopolysiloxanen, die frei sind von organischen Übergangsmetallverbindungen sowie organischen Verbindungen der Metalle der III., IV. und V. Hauptgruppe, herstellbar unter Verwendung der Ausgangsstoffe

(A) kondensationsfähige Gruppen aufweisendes Organopolysiloxan,
(B) Organosiliciumverbindung der Formel

$$\{[(RO)_3Si\text{-}R^3\text{-}]_e\ R^2{}_{1\text{-}e}\}_aSi(OR)_{4\text{-}a} \qquad \text{(II)},$$

worin

R gleich oder verschieden sein kann und Wasserstoffatom oder Alkylrest mit 1 bis 6 Kohlenstoffatomen bedeutet,
$R^2$ gleich oder verschieden sein kann und SiC-gebundene Kohlenwasserstoffreste mit 1 bis 18 Kohlenstoffatomen, die gegebenenfalls mit Halogenatomen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
$R^3$ gleich oder verschieden sein kann und zweiwertige Kohlenwasserstoffreste bedeutet
a 0 oder 1 ist und
e 0 oder 1 ist,

ggfs im Gemisch mit deren Teilhydrolysate mit maximal 8 Si-Atomen,
(C) basischen Stickstoff aufweisende Organosiliciumverbindung, sowie
(D) anionischen oder nicht-ionischen Emulgator.

Metalle der III., IV. und V. Hauptgruppe des Periodensystems sollen im Rahmen der vorliegenden Erfindung Aluminium, Gallium, Indium, Thallium, Germanium, Zinn, Blei, Antimon und Wismut umfassen.
Im Rahmen der vorliegenden Erfindung soll der Begriff "kondensationsfähig" auch eine gegebenenfalls vorausgehende Hydrolyse mitumfassen.
Die erfindungsgemäß eingesetzten, kondensationsfähige Gruppen aufweisenden Organopolysiloxane (A) sind vorzugsweise solche der Formel

$$HO\text{-}[SiR^1{}_2O]_n\text{-}H \qquad \text{(I)},$$

worin

$R^1$ gleiche oder verschiedene SiC-gebundene Kohlenwasserstoffreste mit 1 bis 18 Kohlenstoffatomen, die gegebenenfalls mit Halogenatomen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und
n eine ganze Zahl von mindestens 30 ist.

Beispiele für Kohlenwasserstoffreste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der $\alpha$- und der $\beta$-Phenylethylrest.
Beispiele für substituierte Kohlenwasserstoffreste $R^1$ sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; etherfunktionelle Reste, wie der 3-Methoxypropylrest und der 3-Ethoxypropylrest; cyanofunktionelle Reste, wie der 2-Cyanoethylrest; esterfunktionelle Reste, wie der Methacryloxypropylrest; epoxyfunktionelle Reste, wie der Glycidoxypropylrest und schwefelfunktionelle Reste, wie der 3-Mercaptopropylrest.
Bevorzugt als Reste $R^1$ sind Kohlenwasserstoffreste mit 1 bis 10 Kohlenstoffatomen, wobei besonders bevorzugt mindestens 80 %, insbesondere mindestens 90 %, der Reste $R^1$ Methylreste sind.

Der Durchschnittswert für die Zahl n in Formel (I) ist vorzugsweise so gewählt, daß das Organopolysiloxan der Formel (I) eine Viskosität von mehr als 1000 $mm^2/s$, besonders bevorzugt von mehr als 10 000 $mm^2/s$, insbesondere von etwa 80 000 $mm^2/s$, jeweils gemessen bei einer Temperatur von 25°C, besitzt.

Obwohl in Formel (I) nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie $R^1{}_3SiO_{1/2}$-, $R^1SiO_{3/2}$- und $SiO_{4/2}$-Einheiten, ersetzt sein, wobei $R^1$ die vorstehend dafür angegebene Bedeutung hat.

Die Polydiorganosiloxane gemäß Formel (I) können nach in der Fachwelt bekannten Verfahren, beispielsweise durch Polymerisation bzw. Kondensation niedermolekularer cyclischer bzw. linearer, hydroxy- und/oder alkoxyendblockierter Organopolysiloxane, hergestellt werden.

Bei dem erfindungsgemäß eingesetzten, kondensationsfähige Gruppen aufweisenden Organopolysiloxan (A) kann es sich um eine einzelne Art wie auch um ein Gemisch aus mindestens zwei Arten derartiger kondensationsfähige Gruppen aufweisender Organopolysiloxane handeln.

Bei der Organosiliciumverbindung der Formel (II) kann es sich um ein Silan der Formel

$$R^2{}_aSi(OR)_{4-a} \qquad (II'),$$

sowie um eine Verbindung der Formel

$$(RO)_3Si\text{-}R^3\text{-}Si(OR)_3 \qquad (II''),$$

handeln mit R, $R^2$, $R^3$ und a gleich der oben angegebenen Bedeutung.

Beispiele für Rest $R^2$ sind die für $R^1$ angegebenen Beispiele, wobei Kohlenwasserstoffreste mit 1 bis 18 Kohlenstoffatomen bevorzugt und Methyl-, Ethyl-, Vinyl- und Phenylreste, insbesondere Methylreste, besonders bevorzugt sind.

Bevorzugte Reste R sind Wasserstoffatom und Alkylgruppen mit 1 bis 4 Kohlenstoffatomen, wobei Methyl- und Ethylreste besonders bevorzugt sind.

Bevorzugt handelt es sich bei Rest $R^3$ um zweiwertige Kohlenwasserstoffreste mit 1 bis 6 Kohlenstoffatomen, wie zum Beispiel den Methylen-, Ethylen-, Propylen- und Butylenresten, wobei Ethylen- und Propylenreste besonders bevorzugt sind.

Beispiele für die erfindungsgemäß eingesetzte Organosiliciumverbindung (B) sind Methyltrimethoxysilan, Methyltriethoxysilan, Vinyltrimethoxysilan, Vinyltriethoxysilan, Phenyltrimethoxysilan, Phenyltriethoxysilan, Tetraethoxysilan, Tetrapropoxysilan, Methacryloxypropyltrimethoxysilan und $(C_2H_5O)_3Si\text{-}CH_2CH_2\text{-}Si(OC_2H_5)_3$ sowie deren Teilhydrolysate mit maximal 8 Siliciumatomen, wie etwa Hexaethoxydisiloxan, wobei es sich bevorzugt um Methyltrimethoxysilan, Methyltriethoxysilan, Vinyltrimethoxysilan, Vinyltriethoxysilan und Tetraethoxysilan sowie deren Teilhydrolysate mit maximal 6 Siliciumatomen handelt.

Besonders bevorzugt handelt es sich bei der Komponente (B) um reine Silane der Formel (II') und um Gemische aus Silanen der Formel (II') und deren Teilhydrolysate mit maximal 6 Siliciumatomen mit einem Anteil an Teilhydrolysat von höchstens 90 Gewichtsprozent, besonders bevorzugt von höchstens 50 Gewichtsprozent, jeweils bezogen auf das Gewicht des Silan/Teilhydrolysat-Gemisches.

Zur Herstellung der erfindungsgemäßen wäßrigen Dispersionen von Organopolysiloxanen wird Organosiliciumverbindung (B) in Mengen von vorzugsweise 0,01 bis 50 Gewichtsteilen, besonders bevorzugt 0,1 bis 20 Gewichtsteilen, insbesondere 0,1 bis 5 Gewichtsteilen, jeweils bezogen auf 100 Gewichtsteile kondensationsfähige Gruppen aufweisendes Organopolysiloxan (A), eingesetzt.

Bei der erfindungsgemäß eingesetzten Organosiliciumverbindung (B) kann es sich um eine einzelne Art wie auch um ein Gemisch aus mindestens zwei Arten derartiger Organosiliciumverbindungen handeln.

Bei den erfindungsgemäß eingesetzten, basischen Stickstoff aufweisenden Verbindungen (C) handelt es sich vorzugsweise um solche aus Einheiten der Formel

$$R^4{}_bY_cSi(OR^5)_dO_{\frac{4-b-c-d}{2}} \qquad (IV),$$

worin

$R^4$ gleich oder verschieden sein kann und einen einwertigen, SiC-gebundenen, von basischem Stickstoff freien organischen Rest bedeutet,

$R^5$ gleich oder verschieden sein kann und Wasserstoffatom, einen Alkylrest, Alkalimetallkation, Ammonium- oder Phosphoniumgruppe bedeutet,

Y gleich oder verschieden sein kann und einen einwertigen, SiC-gebundenen Rest mit basischem Stickstoff bedeutet,

b 0, 1, 2, oder 3,

c 0, 1, 2, 3 oder 4 und

d 0, 1, 2 oder 3 ist,

mit der Maßgabe, daß die Summe aus b, c und d kleiner oder gleich 4 ist und pro Molekül mindestens ein Rest Y anwesend ist.

Bei Rest $R^4$ handelt es sich vorzugsweise um Kohlenwasserstoffreste mit 1 bis 18 Kohlenstoffatomen, wobei der Methyl-, Ethyl- und Propylrest besonders bevorzugt sind, insbesondere der Methylrest.

Beispiele für Rest $R^4$ sind die für $R^1$ angegebenen Beispiele für Kohlenwasserstoffreste.

Vorzugsweise handelt es sich bei Rest $R^5$ um Wasserstoffatom, Methyl-, Ethylrest und Alkalimetallkation, wobei Wasserstoffatom, Methyl-, Ethylrest, Natrium- und Kaliumkation besonders bevorzugt sind.

Beispiele für Rest $R^5$ sind die für Rest R angegebenen Kohlenwasserstoffreste, die Kationen der Alkalimetalle, wie die von Lithium, Natrium, Kalium, Rubidium und Cäsium, sowie Reste der Formel

$$+NR^6_4 \qquad (V)$$

oder

$$+PR^6_4 \qquad (VI),$$

wobei $R^6$ gleich oder verschieden sein kann und Kohlenwasserstoffrest mit 1 bis 6 Kohlenstoffatomen bedeutet.

Vorzugsweise sind die Reste Y solche der Formel

$$R^7_2NR^8- \qquad (VII),$$

worin $R^7$ gleich oder verschieden sein kann und Wasserstoff, Alkyl-, Cycloalkyl- oder Aminoalkylreste bedeutet und $R^8$ zweiwertiger Kohlenwasserstoffrest bedeutet.

Die Beispiele für Alkyl- und Cycloalkylreste $R^1$ gelten im vollen Umfang auch für Alkyl- bzw. Cycloalkylreste $R^7$.

Vorzugsweise ist an jedes Stickstoffatom in den Resten der Formel (VII) mindestens ein Wasserstoffatom gebunden.

Bevorzugt handelt es sich bei Rest $R^8$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^8$ sind der Methylen-, Ethylen-, Propylen-, Butylen-, Cyclohexylen-, Octadecylen-, Phenylen- und Butenylenrest.

Beispiele für Reste Y sind

$$H_2N(CH_2)_3-,$$

$$H_2N(CH_2)_2NH(CH_2)_2-,$$

$$H_2N(CH_2)_2NH(CH_2)_3-,$$

$$H_2N(CH_2)_2-,$$

$H_3CNH(CH_2)_3$-,

$C_2H_5NH(CH_2)_3$-,

$H_3CNH(CH_2)_2$-,

$C_2H_5NH(CH_2)_2$-,

$H_2N(CH_2)_4$-,

$H_2N(CH_2)_5$-,

$H(NHCH_2CH_2)_3$-,

$C_4H_9NH(CH_2)_2NH(CH_2)_2$-,

cyclo-$C_6H_{11}NH(CH_2)_3$-,

cyclo-$C_6H_{11}NH(CH_2)_2$-,

$(CH_3)_2N(CH_2)_3$-,

$(CH_3)_2N(CH_2)_2$-,

$(C_2H_5)_2N(CH_2)_3$-

und

$(C_2H_5)_2N(CH_2)_2$-.

Bevorzugt handelt es sich bei Y um $H_2N(CH_2)_3$-, $H_2N(CH_2)_2NH(CH_2)_3$-, $H_3CNH(CH_2)_3$-, $C_2H_5NH(CH_2)_3$- und cyclo-$C_6H_{11}NH(CH_2)_3$-, wobei $H_2N(CH_2)_2NH(CH_2)_3$- und cyclo-$C_6H_{11}NH(CH_2)_3$- besonders bevorzugt sind.

Handelt es sich bei den Organosiliciumverbindungen aus Einheiten der Formel (IV) um Silane, so ist b bevorzugt 0, 1 oder 2, besonders bevorzugt 0 oder 1, c bevorzugt 1 oder 2, besonders bevorzugt 1, und d bevorzugt 1, 2 oder 3, besonders bevorzugt 2 oder 3, mit der Maßgabe, daß die Summe aus b, c und d gleich 4 ist.

Beispiele für die erfindungsgemäßen Silane der Formel (IV) sind

$H_2N(CH_2)_3$-$Si(OCH_3)_3$

$H_2N(CH_2)_3$-$Si(OC_2H_5)_3$

$H_2N(CH_2)_3\text{-}Si(OCH_3)_2CH_3$

$H_2N(CH_2)_3\text{-}Si(OC_2H_5)_2CH_3$

$H_2N(CH_2)_3\text{-}Si(OH)_{3\text{-}x}(OM)_x$

$H_2N(CH_2)_3\text{-}Si(OH)_{2\text{-}y}(OM)_yCH_3$

$H_2N(CH_2)_2NH(CH_2)_3\text{-}Si(OCH_3)_3$

$H_2N(CH_2)_2NH(CH_2)_3\text{-}Si(OC_2H_5)_3$

$H_2N(CH_2)_2NH(CH_2)_3\text{-}Si(OCH_3)_2CH_3$

$H_2N(CH_2)_2NH(CH_2)_3\text{-}Si(OC_2H_5)_2CH_3$

$H_2N(CH_2)_2NH(CH_2)_3\text{-}Si(OH)_{3\text{-}x}(OM)_x$

$H_2N(CH_2)_2NH(CH_2)_3\text{-}Si(OH)_{2\text{-}y}(OM)_yCH_3$

cyclo-$C_6H_{11}NH(CH_2)_3\text{-}Si(OCH_3)_3$

cyclo-$C_6H_{11}NH(CH_2)_3\text{-}Si(OC_2H_5)_3$

cyclo-$C_6H_{11}NH(CH_2)_3\text{-}Si(OCH_3)_2CH_3$

cyclo-$C_6H_{11}NH(CH_2)_3\text{-}Si(OC_2H_5)_2CH_3$

cyclo-$C_6H_{11}NH(CH_2)_3\text{-}Si(OH)_{3\text{-}x}(OM)_x$

und

cyclo-$C_6H_{11}NH(CH_2)_3\text{-}Si(OH)_{2\text{-}y}(OM)_yCH_3$,

wobei

$H_2N(CH_2)_2NH(CH_2)_3\text{-}Si(OCH_3)_3$

$H_2N(CH_2)_2NH(CH_2)_3\text{-}Si(OC_2H_5)_3$

$$H_2N(CH_2)_2NH(CH_2)_3\text{-}Si(OCH_3)_2CH_3$$

$$H_2N(CH_2)_2NH(CH_2)_3\text{-}Si(OC_2H_5)_2CH_3$$

$$H_2N(CH_2)_2NH(CH_2)_3\text{-}Si(OH)_{3-x}(ONa)_x$$

$$H_2N(CH_2)_2NH(CH_2)_3\text{-}Si(OH)_{2-y}(ONa)_yCH_3$$

$$\text{cyclo-}C_6H_{11}NH(CH_2)_3\text{-}Si(OCH_3)_3$$

$$\text{cyclo-}C_6H_{11}NH(CH_2)_3\text{-}Si(OC_2H_5)_3$$

$$\text{cyclo-}C_6H_{11}NH(CH_2)_3\text{-}Si(OCH_3)_2CH_3$$

$$\text{cyclo-}C_6H_{11}NH(CH_2)_3\text{-}Si(OC_2H_5)_2CH_3$$

$$\text{cyclo-}C_6H_{11}NH(CH_2)_3\text{-}Si(OH)_{3-x}(ONa)_x$$

sowie

$$\text{cyclo-}C_6H_{11}NH(CH_2)_3\text{-}Si(OH)_{2-y}(ONa)_yCH_3$$

bevorzugt und

$$H_2N(CH_2)_2NH(CH_2)_3\text{-}Si(OCH_3)_3$$

$$H_2N(CH_2)_2NH(CH_2)_3\text{-}Si(OCH_3)_2CH_3$$

$$\text{cyclo-}C_6H_{11}NH(CH_2)_3\text{-}Si(OCH_3)_3$$

$$\text{cyclo-}C_6H_{11}NH(CH_2)_3\text{-}Si(OCH_3)_2CH_3$$

$$H_2N(CH_2)_2NH(CH_2)_3\text{-}Si(OH)_{3-x}(ONa)_x$$

und

$$H_2N(CH_2)_2NH(CH_2)_3\text{-}Si(OH)_{2-y}(ONa)_yCH_3$$

besonders bevorzugt sind, mit x gleich 0, 1, 2 oder 3, y gleich 0, 1 oder 2 und M gleich Kation des Natriums oder Kaliums.

Silane der Formel (IV) sind handelsübliche Produkte und können nach in der Siliciumchemie gängigen Verfahren hergestellt werden.

Falls es sich bei der Organosiliciumverbindung aus Einheiten der Formel (IV) um Organopolysiloxane handelt,

ist der durchschnittliche Wert von b vorzugsweise zwischen 0,5 und 2,5, besonders bevorzugt zwischen 0,8 und 2,0, der durchschnittliche Wert von c vorzugsweise zwischen 0,01 und 1,5, besonders bevorzugt zwischen 0,01 und 1,0 und der durchschnittliche Wert von d vorzugsweise zwischen 0 und 2,0, besonders bevorzugt zwischen 0 und 0,2, mit der Maßgabe, daß die Summe aus b, c und d kleiner oder gleich 3 ist.

Die erfindungsgemäß eingesetzten Organopolysiloxane aus Einheiten der Formel (IV) haben eine Viskosität bei 25°C von vorzugsweise 5 bis $10^5$ $mm^2/s$, besonders bevorzugt von 10 bis $10^4$ $mm^2/s$.

Beispiele für die erfindungsgemäß eingesetzten Organopolysiloxane aus Einheiten der Formel (IV) sind

$$\begin{array}{c} H_2N(CH_2)_2NH(CH_2)_3 \\ | \\ (CH_3)_3SiO\ [(CH_3)_2SiO]_k\ [CH_3SiO]_m\ Si(CH_3)_3 \end{array} \qquad (IVa),$$

$$\begin{array}{c} H_2N(CH_2)_2NH(CH_2)_3 \\ | \\ CH_3O\ [(CH_3)_2SiO]_k\ [CH_3SiO]_m\ CH_3 \end{array} \qquad (IVa'),$$

$$\begin{array}{c} H_2N(CH_2)_2NH(CH_2)_3 \\ | \\ CH_3CH_2O\ [(CH_3)_2SiO]_k\ [CH_3SiO]_m\ CH_2CH_3 \end{array} \qquad (IVa''),$$

$$\begin{array}{c} cyclo\text{-}C_6H_{11}NH(CH_2)_3 \\ | \\ (CH_3)_3SiO\ [(CH_3)_2SiO]_k\ [CH_3SiO]_m\ Si(CH_3)_3 \end{array} \qquad (IVb),$$

$$\begin{array}{c} cyclo\text{-}C_6H_{11}NH(CH_2)_3 \\ | \\ CH_3O\ [(CH_3)_2SiO]_k\ [CH_3SiO]_m\ CH_3 \end{array} \qquad (IVb')$$

und

$$\begin{array}{c} cyclo\text{-}C_6H_{11}NH(CH_2)_3 \\ | \\ CH_3CH_2O\ [(CH_3)_2SiO]_k\ [CH_3SiO]_m\ CH_2CH_3 \end{array} \qquad (IVb''),$$

wobei jeweils das Verhältnis von k zu m zwischen 2:3 und 9:1 und die Summe von k und m zwischen 10 und 1000 liegt, sowie

$$H_2N(CH_2)_2NH(CH_2)_3$$
$$|$$
$$[(CH_3)_2SiO]_o\ [SiO_{3/2}]_p\ [(CH_3)_3SiO_{1/2}]_r \qquad (IVc),$$

$$H_2N(CH_2)_2NH(CH_2)_3$$
$$|$$
$$[CH_3O]_o\ [SiO_{3/2}]_p\ [(CH_3)_3SiO_{1/2}]_r \qquad (IVc'),$$

$$H_2N(CH_2)_2NH(CH_2)_3$$
$$|$$
$$[CH_3CH_2O]_o\ [SiO_{3/2}]_p\ [(CH_3)_3SiO_{1/2}]_r \qquad (IVc'')$$

und

$$cyclo\text{-}C_6H_{11}NH(CH_2)_3$$
$$|$$
$$[(CH_3)_2SiO]_o\ [SiO_{3/2}]_p\ [(CH_3)_3SiO_{1/2}]_r \qquad (IVd),$$

wobei die Summe aus o+p+r zwischen 10 und 1000, das Verhältnis von o : (o+p+r) zwischen 0 und 0,9, insbesondere zwischen 0,2 und 0,7, das Verhältnis von p : (o+p+r) zwischen 0,05 und 0,6, insbesondere zwischen 0,1 und 0,5, und das Verhältnis von r : (o+p+r) zwischen 0,05 und 0,75, insbesondere zwischen 0,2 und 0,6, liegt,
sowie

$$H_2N(CH_2)_2NH(CH_2)_3$$
$$|$$
$$CH_3O\text{-}[CH_3SiO]_n\text{-}CH_3 \qquad (IVe),$$

wobei n zwischen 5 und 100 liegt.

Organopolysiloxane aus Einheiten der Formel (IV) sind handelsübliche Produkte und können nach in der Siliciumchemie gängigen Verfahren hergestellt werden.

Bevorzugt werden als Komponente (C) Kalium-N-(2-aminoethyl)-3-aminopropylmethylsilanolat, Natrium-N-(2-aminoethyl)-3-aminopropylmethylsilanolat, $\alpha,\omega$-Dimethoxypoly(N-(2-aminoethyl)-3-aminopropylmethylsiloxan) und N-(2-Aminoethyl)-3-aminopropylmethyldimethoxysilan eingesetzt.

Bei der erfindungsgemäß eingesetzten basischen Stickstoff aufweisenden Verbindung (C) kann es sich um eine einzelne Art wie auch um ein Gemisch aus mindestens zwei Arten derartiger Verbindungen handeln.

Zur Herstellung der erfindungsgemäßen wäßrigen Dispersionen von Organopolysiloxanen wird Komponente (C) in einer solchen Menge eingesetzt, daß der Gehalt an basischem Stickstoff vorzugsweise 0,01 bis 5 Gewichtsteile, besonders bevorzugt 0,01 bis 1 Gewichtsteile, insbesondere 0,04 bis 0,5 Gewichtsteile, jeweils bezogen auf 100 Gewichtsteile kondensationsfähige Gruppen aufweisendes Organopolysiloxan (A), beträgt.

Die erfindungsgemäßen, wäßrigen Dispersionen von Organopolysiloxanen werden durch Emulgatoren (D) stabilisiert. Es können anionaktive, sowie nichtionische Emulgatoren verwendet werden. Diese Emulgatoren sowie deren Dosierung sind dem Fachmann hinreichend bekannt. Es kann eine Art von Emulgator, beispielsweise ein anionaktiver, es können auch Gemische von mindestens einem anionaktiven mit mindestens einem nichtionischen Emulgatotor verwendet werden.

Die Emulgatoren (D) können als solche der zu dispergierenden bzw. als Dispersion zu stabilisierenden Mischung zugegeben werden, sie können auch aus einem Vorläufer, beispielsweise der entsprechenden Säure, Base oder eines Salzes des eigentlichen Emulgators in der zu dispergierenden bzw. als Dispersion zu stabilisierenden Mischung durch chemische Reaktion(en) gebildet werden.

Die anionaktiven Emulgatoren sind vorzugsweise die Salze der bei der Emulsionspolymerisation zur Ausbildung des kondensationsfähige Gruppen aufweisenden Organopolysiloxans (A) verwendeten oberflächenaktiven Sulfonsäuren nach US-A 3,294,725 (D.E. Findley, Dow Corning Corporation; ausgegeben am 27. Dezember 1966), wo die oberflächenaktiven Sulfonsäuren und Salze davon angegeben sind. Die Alkali- oder Ammoniumsalze der Sulfonsäuren sind bevorzugt, insbesondere die Kaliumsalze.

Als Beispiele für die Sulfonsäuren seien aliphatisch substituierte Benzolsulfonsäuren, aliphatisch substituierte Naphthalinsulfonsäuren, aliphatische Sulfonsäuren, Silylalkylsulfonsäuren und aliphatisch substituierte Diphenylethersulfonsäuren genannt.

Des weiteren können als anionische Emulgiermittel auch Alkalisulforizinoleate, sulfonierte Glycerinester von Fettsäuren, Salze von sulfonierten einwertigen Alkoholestern, Amide von Aminosulfonsäuren, wie beispielsweise das Natriumsalz von Oleylmethyltaurid, Alkalisalze von sulfonierten aromatischen Kohlenwasserstoffen, wie Natrium-$\alpha$-naphthalin-monosulfonat, Kondensationsprodukte von Naphthalinsulfonsäuren mit Formaldehyd und Sulfate, wie Ammoniumlaurylsulfat, Triethanolaminlaurylsulfat und Natriumlaurylethersulfat, verwendet werden.

Nichtionische Emulgatoren werden vorzugsweise zusätzlich zu anionaktivem Emulgator verwendet. Beispiele für derartige nichtionische Emulgatoren sind Saponine, Additionsprodukte von Fettsäuren mit Ethylenoxid, wie Dodecansäureester mit Tetraethylenoxid, Additionsprodukte von Ethylenoxid mit Sorbitantrioleat, Additionsprodukte von phenolischen Verbindungen mit Seitenketten mit Ethylenoxid, wie Additionsprodukte von Ethylenoxid mit Isododecylphenol, und Iminderivate, wie polymerisiertes Ethylenimin, Additionsprodukte von Alkoholen mit Ethylenoxid, wie Polyethylenglykol-(10)-isotridecylether.

Des weiteren können auch wasserlösliche Polymere, die in der Literatur als geeignet für die Stabilisierung von Dispersionen beschrieben werden, wie etwa Polyvinylalkohole, Polyvinylpyrrolidone, Polyvinylsulfate, Polyacrylate, Polyacrylamide und Malonsäure-Styrol-Copolymere oder auch Polysaccharide, als Emulgatoren zur Herstellung der erfindungsgemäßen Dispersionen eingesetzt werden.

Bei dem Emulgator (D), handelt es sich um anionaktive Emulgatoren, nichtionische Emulgatoren sowie deren Gemische, besonders bevorzugt um Alkalisalze von Organosulfonsäuren, Organopolyglycolether sowie Polyvinylalkohole.

Die für die Stabilisierung der erfindungsgemäßen wäßrigen Dispersionen von Organopolysiloxanen vorteilhafte Menge an Emulgator ist stark von der Zusammensetzung der jeweiligen Dispersion abhängig. Bezogen auf 100 Gewichtsteile kondensationsfähige Gruppen aufweisendes Organopolysiloxan (A) genügen im allgemeinen 0,5 bis 10 Gewichtsteile an Emulgator(en).

Des weiteren können die erfindungsgemäßen wäßrigen Dispersionen von Organopolysiloxanen Füllstoffe (E) enthalten.

Beispiele für Füllstoffe (E) sind nicht verstärkende Füllstoffe, also Füllstoffe mit einer BET-Oberfläche von bis zu 50 $m^2/g$, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mehr als 50 $m^2/g$, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest, sowie Kunststoffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen.

Falls Füllstoffe (E) eingesetzt werden, handelt es sich um Mengen von vorzugsweise 0,1 bis 200 Gewichtsteilen, besonders bevorzugt 0,5 bis 100 Gewichtsteilen, jeweils bezogen auf 100 Gewichtsteile kondensationsfähige Gruppen aufweisendes Organopolysiloxan (A). Die eingesetzte Menge an Füllstoff (E) kann in weiten Bereichen variiert werden und richtet sich insbesondere nach dem jeweiligen Anwendungszweck der erfindungsgemäßen Dispersionen.

Ferner können die erfindungsgemäßen wäßrigen Dispersionen von Organopolysiloxanen Zusatzstoffe (F), vorzugsweise ausgewählt aus der Gruppe der Haftvermittler, Weichmacher, Schaumverhütungsmittel, Thixotropier- und Dispergiermittel, Pigmente, lösliche Farbstoffe, Fungizide, Riechstoffe sowie der organischen, in Bezug auf die Dispersionen inerten Lösungsmittel, enthalten.

Beispiele für Haftvermittler, die zur Verbesserung der Haftung der aus den erfindungsgemäßen wäßrigen Dispersionen nach Entfernen ihrer Lösungsmittelanteile erhaltenen elastomeren Produkte auf dem Untergrund, auf dem die erfindungsgemäßen Dispersionen aufgebracht worden sind, zugesetzt werden, sind aminofunktionelle Silane, wie N-(2-Aminoethyl)-3-aminopropyltrialkoxysilane, bei denen der Alkoxyrest ein Methoxy-, Ethoxy-, n-Propoxy- oder Isopropoxyrest ist.

Beispiele für Weichmacher sind bei Raumtemperatur flüssige, durch Trimethylsiloxygruppen endblockierte Dimethylpolysiloxane mit einer Viskosität von mindestens 10 $mm^2/s$.

Beispiele für organische, in Bezug auf die Dispersionen inerte Lösungsmittel sind Kohlenwasserstoffe, wie Petrolether verschiedener Siedebereiche, n-Pentan, n-Hexan, Hexan-Isomerengemisch, Toluol und Xylol.

Beispiele für Thixotropiermittel sind Carboxymethylcellulose und Polyvinylalkohol.

Beispiele für Dispergiermittel sind Polyacrylsäuresalze und Polyphosphate.

Die genannten Thixotropier- und Dispergiermittel haben teilweise auch emulgierende Eigenschaften, so daß sie als Emulgatoren benutzt werden können.

Von jeder der vorstehend als mögliche Komponente für die erfindungsgemäßen wäßrigen Dispersionen genannten Gruppen von Stoffen kann jeweils als eine Komponente ein Stoff dieser Gruppe oder auch ein Gemisch aus mindestens zwei verschiedenen dieser Stoffe verwendet werden.

Die erfindungsgemäßen wäßrigen Dispersionen von Organopolysiloxanen besitzen vorzugsweise pH-Werte von 5 bis 13, besonders bevorzugt von 6 bis 11.

Bei den erfindungsgemäßen wäßrigen Dispersionen von Organopolysiloxanen können Feststoffgehalte von bis zu 96 Gewichtsprozent erreicht werden. Niedrigere Feststoffgehalte sind selbstverständlich möglich. Selbst bei erfindungsgemäßen, wäßrigen Silicondispersionen, die keine Füllstoffe enthalten, kann ein Feststoffgehalt von über 90 Gewichtsprozent erzielt werden. Als Feststoffgehalt ist hier der Gewichtsanteil aller Bestandteile der Dispersion außer Wasser und, falls verwendet, organischem Lösungsmittel am Gesamtgewicht der Dispersion zu verstehen.

Die erfindungsgemäßen wäßrigen Dispersionen von Organopolysiloxanen können je nach Anwendung standfest oder fließfähig sein.

Bevorzugt handelt es sich bei den erfindungsgemäßen Organosiloxandispersionen um solche, die ausschließlich hergestellt werden unter Verwendung der Komponenten (A), (B), (C), (D), Wasser sowie gegebenenfalls (E) und (F).

Besonders bevorzugt handelt es sich bei den erfindungsgemäßen Organosiloxandispersionen um solche, die ausschließlich hergestellt werden unter Verwendung der Komponenten (A), (B), (C), (D), Wasser sowie gegebenenfalls (E).

Grundsätzlich können die erfindungsgemäßen, wäßrigen Dispersionen nach beliebigen, bisher bekannten Verfahren hergestellt werden.

Als wesentlich vereinfachte und damit ökonomische Herstellungsweise ergibt sich aus der erfindungsgemäßen Zusammensetzung der wäßrigen Dispersionen von Organopolysiloxanen ein Verfahren (Verfahren 1), das dadurch gekennzeichnet ist, daß alle Bestandteile der Dispersion außer Füllstoff (E) miteinander vermischt und gemeinsam dispergiert werden. Danach kann, falls erwünscht, sofort der Füllstoff (E) in die Dispersion eingearbeitet werden.

Nach einer anderen Verfahrensweise (Verfahren 2) werden alle Bestandteile der Dispersion außer Komponente (C) und Füllstoff (E) miteinander vermischt und gemeinsam dispergiert. Danach werden Komponente (C) sowie gegebenenfalls Füllstoff (E) in die Dispersion eingearbeitet.

Bevorzugt werden die erfindungsgemäßen Dispersionen nach dem Verfahren 2 hergestellt.

Das Emulgieren bzw. Dispergieren kann in üblichen, zur Herstellung von Emulsionen bzw. Dispersionen geeigneten Mischgeräten, wie beispielsweise schnellaufende Stator-Rotor-Rührgeräte nach Prof. P. Willems, bekannt unter dem Handelsnamen "Ultra-Turrax", erfolgen. Hierzu sei noch auf Ullmanns Encyklopädie der Technischen Chemie, Urban & Schwarzenberg, München, Berlin, 3. Auflage, Band 1, Seite 720 ff verwiesen.

Selbstverständlich kann die erfindungsgemäße Dispersion auch auf andere Weise hergestellt werden. Es hat sich jedoch gezeigt, daß die Verfahrensweise kritisch ist und nicht alle Herstellungsarten Dispersionen ergeben, die nach Entfernen von Wasser zu Elastomere führen.

Die erfindungsgemäßen Verfahren haben den Vorteil, daß sie sehr einfach in der Durchführung sind und wäßrige Dispersionen mit sehr hohen Feststoffgehalten hergestellt werden können. Ein hoher Festgehalt bildet die Voraussetzung für eine geringe oder verschwindende Schrumpfung beim Ausvulkanisieren, die für die meisten Anwendungsbereiche wünschenswert ist.

Die erfindungsgemäßen Verfahren haben ferner den Vorteil, daß die einzelnen Bestandteile der wäßrigen Dispersion von Organopolysiloxanen ohne Vorbehandlungen eingesetzt werden können, insbesondere entfällt die häufig im Stand der Technik beschriebene Kondensation bzw. Polymerisation der Polyorganosiloxankomponente vor dem Emulgieren.

Die erfindungsgemäßen Verfahren haben also den Vorteil, daß die wäßrigen Dispersionen in einem einzigen Arbeitsgang hergestellt werden können, ohne daß Reifezeiten während der Herstellung abgewartet werden müssen, welche den Herstellungsprozeß verkomplizieren und verlangsamen würden.

Das erfindungsgemäße Verfahren kann diskontinuierlich wie auch kontinuierlich durchgeführt werden.

Die erfindungsgemäßen wäßrigen Dispersionen haben den Vorteil, daß sie frei von organischen Übergangsmetallverbindungen sowie organischen Verbindungen der Metalle der III., IV. und V. Hauptgruppe sind, wodurch u.a. eine hohe Lagerstabilität der Dispersionen bedingt ist.

Vorzugsweise sind die erfindungsgemäßen, wäßrigen Dispersionen bei Raumtemperatur und Luftausschluß und dem Druck der umgebenden Atmosphäre über einen Zeitraum von mindestens drei Jahren lagerstabil, d.h. daß sich bei Lagerung der unvulkanisierten Dispersionen unter den genannten Bedingungen über einen längeren Zeitraum von mindestens drei Jahren die Eigenschaften sowohl der unvulkanisierten Dispersionen als auch der daraus nach Entfernung des Wassers resultierenden Elastomeren nicht oder nur unwesentlich verändern. Insbesondere die Konsistenz der wäßrigen Dispersionen sowie die mechanischen Eigenschaften und die Haftungseigenschaften der aus den Dispersionen erhaltenen Elastomere bleiben nach langer Lagerung der unvulkanisierten Dispersionen unter Luftausschluß und bei Raumtemperatur erhalten.

Die erfindungsgemäßen wäßrigen Dispersionen sowie die daraus resultierenden Elastomere haben den Vorteil, daß sie geruchsfrei sind und als toxikologisch unbedenklich gelten.

Die erfindungsgemäßen wäßrigen Dispersionen haben den Vorteil, daß die nach Entfernung des Wassers resultierenden Elastomere eine absolut trockene und klebfreie Oberfläche aufweisen. Klebrige Vulkanisatoberflächen, wie sie häufig aus wäßrigen Dispersionen basierend auf Organopolysiloxanharzen sowie auf Acrylatbasis resultieren, neigen nämlich zu erhöhter Verschmutzung durch das Anhaften von Schmutzteilchen wie etwa Staub.

Die erfindungsgemäßen wäßrigen Dispersionen von Organopolysiloxanen härten schon bei Raumtemperatur innerhalb kurzer Zeit nach Verdampfen des Lösungsmittelanteils, d.h. des Wassers und ggf. organischen Lösungsmittels, zu Elastomeren aus.

Die erfindungsgemäßen wäßrigen Dispersionen, insbesondere solche, die unter Verwendung von Polyvinylalkoholen hergestellt wurden, haben den Vorteil, daß sie in dünnen Schichten zu transparenten Elastomeren aushärten.

Die erfindungsgemäßen wäßrigen Dispersionen von Organopolysiloxanen können für alle Zwecke eingesetzt werden, für die auch bisher wäßrige Dispersionen von Organopolysiloxanen verwendet werden. Sie können beispielsweise als Dichtungsmassen, Farben, Anstrichsysteme und als elektrisch isolierende bzw. leitende, hydrophobe, klebrige Stoffe abweisende Beschichtungssysteme oder als Grundlage bzw. Zusätze zu solchen Systemen dienen.

Die erfindungsgemäßen wäßrigen Dispersionen haben den weiteren Vorteil, daß sie auf vielen Substraten, wie beispielsweise Papier, Textilien, mineralischen Baustoffen, Kunststoffen, Holz und vielen anderen Unterlagen, festhaftende Überzüge bilden. Das Beschichten kann dabei z.B. durch Streichen, Walzen, Tauchen oder Spritzen erfolgen.

Als bevorzugtes Einsatzgebiet bieten sich die Verwendung als Dichtungsmassen und Beschichtungsmaterialien an. Als Beispiele seien Fugendichtungsmassen für Fassaden und Gebäude sowie Fensterverglasungen genannt sowie der Einsatz als Dichtungsmassen im Sanitärbereich. Beispiele für Beschichtungen sind u.a. Fassadenbeschichtungen und -imprägnierungen, elastische Fassadenfarben, Textil- und Gewebebeschichtungen.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, werden die nachstehenden Beispiele bei einem Druck der umgebenden Atmosphäre, also etwa 1000 hPa, und bei Raumtemperatur, also bei etwa 22°C, bzw. bei einer Temperatur, die sich beim Zusammengeben der Reaktanden bei Raumtemperatur ohne zusätzliche Heizung oder Kühlung einstellt, durchgeführt.

Die Aminzahl entspricht zahlenmäßig dem Wert, der den Verbrauch in ml von 1-n HCl bei der Neutralisation von 1 g aminofunktionelle Organosiliciumverbindung angibt.

Die Elastomereigenschaften werden jeweils nach den folgenden, genormten Prüfungen ermittelt:

| | |
|---|---|
| Reißfestigkeit | DIN 53504-8551 |
| Reißdehnung | DIN 53504-85S1 |
| Modul | DIN 53504-85S1 |
| Shore-A-Härte | DIN 53505-87 |
| Weiterreißfestigkeit | ASTM D624B-73 |

Es werden folgende Abkürzungen verwendet:

Me : Methylrest
Et : Ethylrest
Prop : Propylrest
Bu : Butylrest
Vi : Vinylrest
Ac : Acetylrest
Ph : Phenylrest

**Beispiel 1**

500 g α,ω-Dihydroxypolydimethylsiloxan mit einer Viskosität von 80 000 $mm^2/s$, 5 g $ViSi(OMe)_3$ und 5 g α, ω-Dimethoxypoly(N-(2-aminoethyl)-3-aminopropylmethylsiloxan) mit einer Viskosität von 4000 $mm^2/s$ und einer Aminzahl von 12 werden gemeinsam mit 30 g einer 75 %igen wäßrigen Natriumdodecylbenzolsulfonatlösung (käuflich erhältlich unter der Bezeichnung "Marlon A 375" bei der Hüls AG) und 75 g Wasser vermischt und mit Hilfe eines Ultra-Turrax-Mischers in eine Dispersion überführt. Nach Hinzufügen von 345 g gefällter Kreide erhält man eine cremig weiche, glatte, dauerhaft homogene, standfeste Masse mit einem Festgehalt von 91 % und einem pH-Wert von 10, die luftdicht in Kartuschen abgefüllt wird. Die Eigenschaften dieser so gelagerten Dispersion sind über einen Zeitraum von über 1 Jahr unverändert.

Aus der so erhaltenen Dispersion von Organopolysiloxanen werden 2 mm dicke Filme erzeugt, indem die wäßrige Dispersion auf eine Oberfläche aus Polytetrafluorethylen (PTFE) aufgetragen und das Wasser bei Raumtemperatur verdampfen gelassen wird. Die sich bildenden trockenen elastischen Filme werden zwei Wochen nach Auftragung auf ihre Elastomereigenschaften hin untersucht. Angaben über die Elastomereigenschaften finden sich in Tabelle 1.

**Beispiel 2**

Die in Beispiel 1 beschriebene Verfahrensweise wird wiederholt mit der Abänderung, daß anstelle der 5 g $ViSi(OMe)_3$ jeweils in unterschiedlichen Ansätzen die in Tabelle 2 angegebenen Organosiliciumverbindungen eingesetzt werden:

Tabelle 2

| Beispiel | eingesetzte Organosiliciumverbindung | |
|---|---|---|
| 2a) | 5 g | $ViSi(OEt)_3$ |
| 2b) | 5 g | $MeSi(OMe)_3$ |
| 2c) | 5 g | $PhSi(OMe)_3$ |
| 2d) | 5 g | Teilhydrolysatgemisch von $Si(OEt)_4$ aus 10 Mol% Monomer, 34 Mol% $(EtO)_3SiO_{1/2}$-, 38 Mol% $(EtO)_2SiO$- und 18 Mol% $EtOSiO_{3/2}$-Einheiten |
| 2e) | 5 g | $H_2C{=}CMe\text{-}COO\text{-}(CH_2)_3Si(OMe)_3$ |

Nach Hinzufügen von 345 g gefällter Kreide zu jedem der obigen Ansätze a) bis e) erhält man jeweils eine cremig weiche, glatte, dauerhaft homogene, standfeste Masse mit einem Festgehalt von etwa 91 % und einem pH-Wert von ca. 10, die luftdicht in Kartuschen abgefüllt wird. Die Eigenschaften einer jeden der so gelagerten Dispersionen sind über einen Zeitraum von über 1 Jahr unverändert.

Aus der so erhaltenen Dispersion von Organopolysiloxanen werden jeweils 2 mm dicke Filme erzeugt, indem die wäßrige Dispersion auf eine Oberfläche aus Polytetrafluorethylen (PTFE) aufgetragen und das Wasser bei Raumtemperatur verdampfen gelassen wird. Die sich bildenden trockenen elastischen Filme werden zwei Wochen nach Auftragung auf ihre Elastomereigenschaften hin untersucht. Angaben über die Elastomereigenschaften finden sich in Tabelle 1.

**Beispiel 3**

Die in Beispiel 1 beschriebene Verfahrensweise wird wiederholt mit der Abänderung, daß anstelle von 30 g einer 75 %igen wäßrigen Natriumdodecylbenzolsulfonatlösung jeweils in unterschiedlichen Ansätzen die in Tabelle 3 angegebenen Verbindungen bzw. Mischungen eingesetzt werden:

Tabelle 3

| Beispiel | eingesetzte Verbindungen bzw. Mischungen |
|---|---|
| 3a) | 30 g einer 1:1 Mischung aus einer 75 %igen wäßrigen Natriumdodecylbenzolsulfonatlösung und einer 80 %igen wäßrigen Lösung von Polyethylenglykol-(10)-isotridecylether (käuflich erhältlich unter dem Namen "Arlypon IT 10" bei der Fa. Grünau) |
| 3b) | 30 g einer 80 %igen wäßrigen Lösung von Polyethylenglykol-(10)-isotridecylether |

Tabelle 3 (fortgesetzt)

| Beispiel | eingesetzte Verbindungen bzw. Mischungen |
|---|---|
| 3c) | 30 g einer Mischung im Gewichtsverhältnis 3:1 von Nonylphenolpolyethylenglykol(15)ether (käuflich erhältlich unter der Bezeichnung "Arkopal N-150" bei der Hoechst AG) und Nonylphenolpolyethylenglykol(5)ether (käuflich erhältlich unter der Bezeichnung "Arkopal N-050" bei der Hoechst AG) |

Nach Hinzufügen von 345 g gefällter Kreide zu jedem der obigen Ansätze a) bis c) erhält man jeweils eine cremig weiche, glatte, dauerhaft homogene standfeste Masse mit einem Festgehalt von 91 % und einem pH-Wert von ca. 10, die luftdicht in Kartuschen abgefüllt wird. Die Eigenschaften einer jeden der so gelagerten Dispersionen sind über einen Zeitraum von über 1 Jahr unverändert.

Aus der so erhaltenen Dispersion von Organopolysiloxanen werden 2 mm dicke Filme erzeugt, indem die wäßrige Dispersion auf eine Oberfläche aus Polytetrafluorethylen (PTFE) aufgetragen und das Wasser bei Raumtemperatur verdampfen gelassen wird. Die sich bildenden trockenen elastischen Filme werden zwei Wochen nach Auftragung auf ihre Elastomereigenschaften hin untersucht. Angaben über die Elastomereigenschaften finden sich in Tabelle 1.

**Beispiel 4**

200 g $\alpha,\omega$-Dihydroxypolydimethylsiloxan mit einer Viskosität von 80 000 $mm^2/s$, 5 g $ViSi(OMe)_3$ und 10 g 3-(2-Aminoethylamino)propyl-funktionelles Polydimethylsiloxan mit einer Viskosität von 1000 $mm^2/s$ und einer Aminzahl von 0,3 (käuflich erhältlich unter der Bezeichnung "Finish WR 1300" bei der Wacker-Chemie GmbH) werden gemeinsam mit 2 g $\alpha,\omega$-Dimethoxypoly(N-(2-aminoethyl)-3-aminopropylmethylsiloxan) mit einer Viskosität von 4000 $mm^2/s$ und einer Aminzahl von 12, 20 g Wasser und 50 g einer 10 %igen wäßrigen Lösung eines Polyvinylalkohols mit einem Molekulargewicht von 85 000 g/mol und einer Verseifungszahl von 240 (käuflich erhältlich unter dem Markennamen "Polyviol" W 30/240 bei der Wacker-Chemie GmbH) vermischt und mit Hilfe eines Ultra-Turrax-Mischers in eine Dispersion überführt. Man erhält eine weiße, cremig weiche, glatte, dauerhaft homogene, standfeste Masse mit einem Festgehalt von 84 % und einem pH-Wert von 7,5, die luftdicht in Kartuschen abgefüllt wird. Die Eigenschaften dieser so gelagerten Dispersion sind über einen Zeitraum von über 1 Jahr unverändert. Das vulkanisierte Produkt ist transparent.

Aus der so erhaltenen Dispersion von Organopolysiloxanen werden 2 mm dicke Filme erzeugt, indem die wäßrige Dispersion auf eine Oberfläche aus Polytetrafluorethylen (PTFE) aufgetragen und das Wasser bei Raumtemperatur verdampfen gelassen wird. Die sich bildenden trockenen elastischen Filme werden zwei Wochen nach Auftragung auf ihre Elastomereigenschaften hin untersucht. Angaben über die Elastomereigenschaften finden sich in Tabelle 1.

**Beispiel 5**

Die in Beispiel 1 beschriebene Verfahrensweise wird wiederholt mit der Abänderung, daß anstelle von 5 g $\alpha,\omega$-Dimethoxypoly(N-(2-aminoethyl)-3-aminopropylmethylsiloxan) jeweils in unterschiedlichen Ansätzen die in Tabelle 4 angegebenen basischen Stickstoff enthaltenden Organosiliciumverbindungen eingesetzt werden:

Tabelle 4

| Beispiel | eingesetzte basischen Stickstoff enthaltende Organosiliciumverbindung |
|---|---|
| 5a) | 5 g 50%ige wäßrige Lösung von Kalium-N-(2-aminoethyl)-3-aminopropylmethylsilanolat (hergestellt gemäß der eingangs zitierten deutschen Anmeldung P43 40 400.6) |
| 5b) | 5 g N-(2-Aminoethyl)-3-aminopropylmethyldimethoxysilan (käuflich erhältlich unter der Bezeichnung "Silan GF 95" bei der Wacker-Chemie GmbH) |
| 5c) | 5 g N-(2-Aminoethyl)-3-aminopropyltrimethoxysilan (käuflich erhältlich unter der Bezeichnung "Silan GF 91" bei der Wacker-Chemie GmbH) |
| 5d) | 15 g eines trimethylsiloxyterminierten Siliconöls bestehend aus Dimethylsiloxy- und Aminopropylmethylsiloxyeinheiten mit einer Viskosität von 30 $mm^2/s$ und einer Aminzahl von 2,5 |

Nach Hinzufügen von 345 g gefällter Kreide zu jedem der obigen Ansätze a) bis d) erhält man jeweils eine cremig weiche, glatte, dauerhaft homogene standfeste Masse mit einem Festgehalt von 91 % und einem pH-Wert von ca. 10, die luftdicht in Kartuschen abgefüllt wird. Die Eigenschaften einer jeden der so gelagerten Dispersionen sind über einen Zeitraum von über 1 Jahr unverändert.

Aus der so erhaltenen Dispersion von Organopolysiloxanen werden jeweils 2 mm dicke Filme erzeugt, indem die wäßrige Dispersion auf eine Oberfläche aus Polytetrafluorethylen (PTFE) aufgetragen und das Wasser bei Raumtemperatur verdampft gelassen wird. Die sich bildenden trockenen elastischen Filme werden zwei Wochen nach Auftragung auf ihre Elastomereigenschaften hin untersucht. Angaben über die Elastomereigenschaften finden sich in Tabelle 1.

**Vergleichsbeispiel 1**

Die in Beispiel 1 beschriebene Verfahrensweise wird wiederholt mit der Abänderung, daß anstelle von 5 g α,ω-Dimethoxypoly(N-(2-aminoethyl)-3-aminopropylmethylsiloxan) jeweils in unterschiedlichen Ansätzen die in Tabelle 5 angegebenen basischen Verbindungen eingesetzt werden:

Tabelle 5

| Vergleichsbeispiel | eingesetzte basische Verbindung |
|---|---|
| V1a) | 5 g 2-Amino-2-methylpropanol |
| V1b) | 5 g 2-Aminoethanol |
| V1c) | 5 g Ethylendiamin |
| V1d) | 5 g Hexylamin |
| V1e) | 5 g 50%ige wäßrige KOH |
| V1f) | 5 g Guanidincarbonat |

Nach Hinzufügen von 345 g gefällter Kreide zu jedem der obigen Ansätze V1a) bis V1f) erhält man jeweils eine cremig weiche, homogene, standfeste Masse mit einem Festgehalt von 91 % und einem pH-Wert von ca. 10, die luftdicht in Kartuschen abgefüllt wird.

Die Dispersionen aus den Vergleichsbeispielen V1a, V1d, V1e und V1f verstrammen innerhalb von drei Tagen in der Kartusche, d.h. die Dispersion wird inhomogen und bricht, und es bilden sich bereits in der Kartusche unerwünschte elastische Anteile. Die Dispersionen sind unbrauchbar. Aus diesen Massen können daher keine Folien zur mechanischen Prüfung mehr hergestellt werden.

Aus den Dispersionen von Organopolysiloxanen der Ansätze V1b und V1c werden jeweils 2 mm dicke Filme erzeugt, indem die wäßrige Dispersion auf eine Oberfläche aus Polytetrafluorethylen (PTFE) aufgetragen und das Wasser bei Raumtemperatur verdampft gelassen wird. Selbst nach einem Zeitraum von über einem Monat bilden sich keine elastischen Folien, die einer Vermessung zugänglich wären.

**Beispiel 6**

Die in Beispiel 1 beschriebene Verfahrensweise wird wiederholt mit der Abänderung, daß anstelle von 345 g gefällter Kreide 800 g gefällte Kreide eingesetzt werden. Die erhaltene cremige, homogene, standfeste Masse weist einen pH-Wert von 10 und einen Festgehalt von 95,6% auf.

Aus der so erhaltenen Dispersion von Organopolysiloxanen wird ein 2 mm dicker Film erzeugt, indem die wäßrige Dispersion auf eine Oberfläche aus Polytetrafluorethylen (PTFE) aufgetragen und das Wasser bei Raumtemperatur verdampfen gelassen wird. Der sich bildende trockene elastische Film wird zwei Wochen nach Auftragung auf seine Elastomereigenschaften hin untersucht. Angaben über die Elastomereigenschaften finden sich in Tabelle 1.

Tabelle 1

| Versuch) | Reißfestigkeit ($N/mm^2$) | Reißdehnung (%) | Modul[1)] ($N/mm^2$) | Shore-A -Härte | Weiterreißfestigkeit (N/mm) |
|---|---|---|---|---|---|
| 1 | 0,4 | 930 | 0,1 | 11 | 3,4 |
| 2a) | 0,4 | 1240 | 0,1 | 9 | 3,5 |
| 2b) | 0,2 | 320 | 0,1 | 5 | 1,2 |

1) Zugfestigkeit bei 100 % Dehnung

Tabelle 1 (fortgesetzt)

| Versuch) | Reißfestigkeit ($N/mm^2$) | Reißdehnung (%) | Modul[1] ($N/mm^2$) | Shore-A -Härte | Weiterreißfestigkeit (N/mm) |
|---|---|---|---|---|---|
| 2c) | 0,5 | 1570 | 0,1 | 6 | 2,7 |
| 2d) | 0,5 | 990 | 0,1 | 6 | 3,8 |
| 2e) | 0,4 | 1090 | 0,1 | 6 | 3,6 |
| 3a) | 0,5 | 710 | 0,2 | 14 | 4,0 |
| 3b) | 0,7 | 530 | 0,2 | 17 | 4,3 |
| 3c) | 0,6 | 470 | 0,2 | 12 | 3,5 |
| 4 | 0,5 | 320 | 0,3 | 15 | 3,9 |
| 5a) | 0,5 | 1290 | 0,1 | 12 | 2,7 |
| 5b) | 0,5 | 930 | 0,2 | 12 | 3,3 |
| 5c) | 0,4 | 790 | 0,1 | 8 | 3,0 |
| 5d) | 0,3 | 810 | 0,1 | 7 | 2,9 |
| V1a) | verstrammt in der Kartusche | | | | |
| V1b) | keine Vulkanisation | | | | |
| V1c) | keine Vulkanisation | | | | |
| V1d) | verstrammt in der Kartusche | | | | |
| V1e) | verstrammt in der Kartusche | | | | |
| V1f) | verstrammt in der Kartusche | | | | |
| 6 | 0,6 | 370 | 0,4 | 23 | 5,3 |

1) Zugfestigkeit bei 100 % Dehnung

## Patentansprüche

**1.** Wäßrige Dispersionen von Organopolysiloxanen, die frei sind von organischen übergangsmetallverbindungen sowie organischen Verbindungen der Metalle der III., IV. und V. Hauptgruppe, herstellbar unter Verwendung der Ausgangsstoffe

(A) kondensationsfähige Gruppen aufweisendes Organopolysiloxan der Formel

$$HO\text{-}[SiR^1{}_2O]_n\text{-}H \qquad (I),$$

worin

$R^1$ gleiche oder verschiedene SiC-gebundene Kohlenwasserstoffreste mit 1 bis 18 Kohlenstoffatomen, die gegebenenfalls mit Halogenatomen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet und

n eine ganze Zahl von mindestens 30 ist.

(B) 0,01 bis 50 Gewichtsteile, bezogen auf 100 Gewichtsteile kondensationsfähige Gruppen aufweisendes Organopolysiloxan (A), Organosiliciumverbindung der Formel

$$\{[(RO)_3Si\text{-}R^3\text{-}]_e\, R^2{}_{1-e}\}_a Si(OR)_{4-a} \qquad (II),$$

worin

R gleich oder verschieden sein kann und Wasserstoffatom oder Alkylrest mit 1 bis 6 Kohlenstoffatomen bedeutet,

$R^2$ gleich oder verschieden sein kann und SiC-gebundene Kohlenwasserstoffreste mit 1 bis 18 Kohlenstoffatomen, die gegebenenfalls mit Halogenatomen, Ethergruppen, Estergruppen, Epoxygruppen, Mercaptogruppen, Cyanogruppen oder (Poly)glykolresten substituiert sind, wobei letztere aus Oxyethylen- und/ oder Oxypropyleneinheiten aufgebaut sind, bedeutet und

$R^3$ gleich oder verschieden sein kann und zweiwertige Kohlenwasserstoffreste bedeutet

a 0 oder 1 ist und

e 0 oder 1 ist, ggf. im Gemisch mit

deren Teilhydrolysaten mit maximal 8 Si-Atomen,

(C) basischen Stickstoff aufweisende Organosiliciumverbindung aus Einheiten der Formel

$$R^4_bY_cSi(OR^5)_dO_{\frac{4-b-c-d}{2}} \quad (IV),$$

worin

$R^4$ gleich oder verschieden sein kann und einen einwertigen, SiC-gebundenen, von basischem Stickstoff freien organischen Rest bedeutet,

$R^5$ gleich oder verschieden sein kann und Wasserstoffatom, einen Alkylrest, Alkalimetallkation, Ammonium- oder Phosphoniumgruppe bedeutet,

Y gleich oder verschieden sein kann und einen einwertigen, SiC-gebundenen Rest mit basischem Stickstoff bedeutet,

b 0, 1, 2, oder 3,

c 0, 1, 2, 3 oder 4 und

d 0, 1, 2 oder 3 ist,

mit der Maßgabe, daß die Summe aus b, c und d kleiner oder gleich 4 ist, pro Molekül mindestens ein Rest Y anwesend ist und Komponente (C) in einer solchen Menge eingesetzt wird, daß der Gehalt an basischem Stickstoff 0,01 bis 5 Gewichtsteile, bezogen auf 100 Gewichtsteile kondensationsfähige Gruppen aufweisendes Organopolysiloxan (A), beträgt, sowie

(D) anionischen oder nicht-ionischen Emulgator in Mengen von 0,5 bis 10 Gewichtsteilen, bezogen auf 100 Gewichtsteile kondensationsfähige Gruppen aufweisendes Organopolysiloxan (A).

**2.** Wäßrige Dispersionen gemäß Anspruch 1, dadurch gekennzeichnet, daß es sich bei Rest $R^2$ um Methyl-, Ethyl-, Vinyl- und Phenylreste handelt.

**3.** Verfahren zur Herstellung der wäßrigen Dispersionen von Organopolysiloxanen gemäß Anspruch 1 oder 2, dadurch gekennzeichnet, daß

(A) kondensationsfähige Gruppen aufweisendes Organopolysiloxan,

(B) Organosiliciumverbindung der Formel (II) und (D) Emulgator sowie gegebenenfalls (F) Zusatzstoffe miteinander vermischt und dispergiert werden und anschließend (C) basischen Stickstoff aufweisende Verbindungen und gegebenenfalls (E) Füllstoff eingearbeitet werden.

**4.** Verfahren zur Herstellung von Elastomeren aus den wäßrigen Dispersionen gemäß Anspruch 1 oder 2 oder hergestellt nach dem Verfahren gemäß Anspruch 3 durch Entfernen von Wasser.

**5.** Verwendung der wäßrigen Dispersionen gemäß Anspruch 1 oder 2 oder hergestellt nach dem Verfahren gemäß Anspruch 3 als Dichtungs- und Beschichtungsmassen.

## Claims

**1.** Aqueous dispersion of organopolysiloxanes, which is free from organic transition metal compounds and organic compounds of metals of main groups III, IV and V, and which can be prepared using the following starting materials:

(A) organopolysiloxane, containing condensable groups of the formula

$$HO\text{-}[SiR^1{}_2O]_n\text{-}H \qquad (I),$$

in which

each $R^1$ is an identical or different SiC-bonded hydrocarbon radical having 1 to 18 carbon atoms which is unsubstituted or substituted with halogen atoms, ether groups, ester groups, epoxy groups, mercapto groups, cyano groups or (poly)glycol radicals, the latter being composed of oxyethylene and/or oxypropylene units, and
n is an integer of at least 30.

(B) 0.01 to 50 parts by weight, based on 100 parts by weight of organopolysiloxane (A) containing condensable groups, of organosilicon compound of the formula

$$\{[(RO)_3Si\text{-}R^3\text{-}]_e\, R^2{}_{1\text{-}e}\}_a Si(OR)_{4\text{-}a} \qquad (II),$$

in which

each R can be identical or different and is a hydrogen atom or alkyl radical having 1 to 6 carbon atoms,
each $R^2$ can be identical or different and is an SiC-bonded hydrocarbon radical having 1 to 18 carbon atoms which is unsubstituted or substituted with halogen atoms, ether groups, ester groups, epoxy groups, mercapto groups, cyano groups or (poly)glycol radicals, the latter being composed of oxyethylene and/or oxypropylene units, and
each $R^3$ can be identical or different and is a divalent hydrocarbon radical,
a is 0 or 1 and
e is 0 or 1,

if desired in a mixture with partial hydrolysates thereof having not more than 8 Si atoms,
(C) organosilicon compound containing basic nitrogen and comprising units of the formula

$$R^4{}_b Y_c Si(OR^5)_d O_{\frac{4\text{-}b\text{-}c\text{-}d}{2}} \qquad (IV),$$

in which

each $R^4$ can be identical or different and is a monovalent, SiC-bonded organic radical which is free from basic nitrogen,
each $R^5$ can be identical or different and is a hydrogen atom, alkyl radical, alkali metal cation, ammonium or phosphonium group,
each Y can be identical or different and is a monovalent, SiC-bonded radical containing basic nitrogen,
b is 0, 1, 2 or 3,
c is 0, 1, 2, 3 or 4 and
d is 0, 1, 2, or 3,

with the proviso that the sum of b, c and d is less than or equal to 4, that at least one radical Y is present per molecule and component (C) is employed in a quantity such that the content of basic nitrogen is from 0.01 to 5 parts by weight based on 100 parts by weight of organopolysiloxane (A) containing condensable groups, and
(D) anionic or nonionic emulsifier in quantities of from 0.5 to 10 parts by weight based on 100 parts by weight of organopolysiloxane (A) containing condensable groups.

**2.** The aqueous dispersion as claimed in claim 1, wherein radical $R^2$ comprises methyl, ethyl, vinyl and phenyl radicals.

**3.** Process for the preparation of an aqueous dispersion of organopolysiloxanes as claimed in claim 1 or 2, characterized in that (A) organopolysiloxane containing condensable groups, (B) organosilicon compound of the formula (II) and (D) emulsifier and, if desired, (F) additives are mixed with one another and the mixture is dispersed and then (C) compounds containing basic nitrogen, and, if desired, (E) filler are incorporated.

4. Process for preparing an elastomer from an aqueous dispersion according to Claim 1 or 2 or prepared by the process according to Claim 3 by removal of water.

5. Use of an aqueous dispersion according to Claim 1 or 2 or prepared by the process according to Claim 3 as a sealing or coating composition.

## Revendications

1. Dispersions aqueuses d'organopolysiloxanes, qui sont exemptes de composés organiques de métaux de transition ainsi que de composés organiques de métaux des groupes principaux III, IV et V, et qui peuvent être préparées en utilisant les produits de départ

(A) organopolysiloxane présentant des groupements condensables de formule

$$HO-[SiR^1{}_2O]_n-H \qquad (I),$$

dans laquelle

$R^1$ signifie des radicaux hydrocarbonés liés à SIC, identiques ou différents avec 1 à 18 atomes de carbone, le cas échéant substitués par des atomes d'halogène, des groupements éther, des groupements ester, des groupements époxy, des groupements mercapto, des groupements cyano ou des radicaux de (poly) glycol, les derniers étant composés d'unités d'oxyéthylène et/ou d'oxypropylène, et
n est un nombre entier d'au moins 30.

(B) 0,01 à 50 parties en poids, sur base de 100 parties en poids d'organopolysiloxane (A) présentant des groupements condensables, d'un composé d'organosilicium de formule

$$\{[(RO)_3Si-R^3-]_eR^2{}_{1-e}\}_aSi(OR)_{4-a} \qquad (II),$$

dans laquelle

R peut être identique ou différent et signifie un atome d'hydrogène ou un radical alkyle avec 1 à 6 atomes de carbone,
$R^2$ peut être identique ou différent et signifie des radicaux hydrocarbonés liés à SIC avec 1 à 18 atomes de carbone, le cas échéant substitués par des atomes d'halogène, des groupements éther, des groupements ester, des groupements époxy, des groupements mercapto, des groupements cyano ou des radicaux de (poly)glycol, les derniers étant composés d'unités d'oxyéthylène et/ou d'oxypropylène, et $R^3$ peut être identique ou différent et signifie des radicaux hydrocarbonés divalents,
a est 0 ou 1 et
e est 0 ou 1,

le cas échéant en mélange avec ses hydrolysats partiels avec maximum 8 atomes de Si

(C) un composé d'organosilicium présentant de l'azote basique et comprenant des unités de formule

$$R^4{}_bY_cSi(OR^5)_dO_{\frac{4-b-c-d}{2}} \qquad (IV),$$

dans laquelle

$R^4$ peut être identique ou différent et signifie un radical organique monovalent lié à SIC sans azote basique,
$R^5$ peut être identique ou différent et signifie un atome d'hydrogène, un radical alkyle, un cation de métal alcalin, un groupement ammonium ou phosphonium,
Y peut être identique ou différent et signifie un radical monovalent lié à SIC avec de l'azote basique,
b est 0, 1, 2, ou 3,
c est 0, 1, 2, 3 ou 4, et
d est 0, 1, 2 ou 3,

étant entendu que la somme de b, c et d est inférieure ou égale à 4, qu'au moins un radical Y est présent par molécule et que le composant (C) est utilisé en une quantité telle que la teneur en azote basique est entre 0,01 et 5 parties en poids, sur base de 100 parties en poids d'organopolysiloxane (A) présentant des groupements condensables, ainsi qu'un

(D) émulsionnant anionique ou non ionique en quantités de 0,5 à 10 parties en poids, sur base de 100 parties en poids d'organopolysiloxane (A) présentant des groupements condensables.

**2.** Dispersions aqueuses suivant la revendication 1, caractérisées en ce que pour le radical $R^2$, il s'agit des radicaux méthyle, éthyle, vinyle et phényle.

**3.** Procédé pour la préparation des dispersions aqueuses d'organopolysiloxanes suivant la revendication 1 ou 2, caractérisé en ce que

(A) un organopolysiloxane présentant des groupements condensables,
(B) un composé d'organosilicium de formule (II) et (D) un émulsionnant ainsi que, le cas échéant, (F) des additifs sont mélangés les uns aux autres et dispersés et ensuite (C) des composés présentant de l'azote basique, et, le cas échéant, (E) une charge sont incorporés.

**4.** Procédé pour la préparation d'élastomères à partir des dispersions aqueuses suivant la revendication 1 ou 2 ou préparés suivant le procédé suivant la revendication 3, par élimination d'eau.

**5.** Utilisation des dispersions aqueuses suivant la revendication 1 ou 2 ou préparées suivant le procédé suivant la revendication 3, en tant que substances d'étanchéité et de revêtement.